Europäisches Patentamt

(19) European Patent Office

Office européen des brevets

(11) EP 0 742 182 B1

(12) EUROPEAN PATENT SPECIFICATION

(45) Date of publication and mention
of the grant of the patent:
**31.03.1999 Bulletin 1999/13**

(51) Int. Cl.$^6$: **C04B 35/584**, C04B 35/593

(21) Application number: **95117756.7**

(22) Date of filing: **10.11.1995**

(54) **Silicon nitride based sintered material, method for preparing the same and its use as a deficiency resistance cutting tool**

Gesintertes Material auf der Basis von Siliconnitrid, Herstellungsverfahren und Verwendung als ausfallresistente Schneidwerkzeug

Matériau fritté à base de nitrure de silicium, procédé de préparation et utilisation comme outil de coup résistant aux défauts

(84) Designated Contracting States:
**DE FR GB**

(30) Priority: **09.05.1995 JP 135848/95**

(43) Date of publication of application:
**13.11.1996 Bulletin 1996/46**

(73) Proprietor:
**Mitsubishi Materials Corporation
Chiyoda-ku, Tokyo (JP)**

(72) Inventor:
**Koyama, Takashi,
c/o Sohgou-Kenkyusho
Omiya-shi, Saitama-ken (JP)**

(74) Representative:
**Türk, Gille, Hrabal
Brucknerstrasse 20
40593 Düsseldorf (DE)**

(56) References cited:
**EP-A- 0 117 936        EP-A- 0 441 316
US-A- 4 535 063        US-A- 5 089 449**

## Description

[Industrial field of the invention]

The present invention is related to a sintered material based on a silicon nitride compound (shown as $Si_3N_4$ below) compound and its use as a cutting tool, having excellent deficiency resistance, which reduces the defects and chipping of a blade under conditions such as continuous cutting, continual cutting requiring higher toughness, and heavy load cuttings, i.e. deep cutting and high sending rate cutting.

The present invention is further related to a process for preparing the sintered material based on a silicon nitride.

[Description of the related art]

Many conventional $Si_3N_4$ based cutting tools have been proposed and used for continuous and continual cutting of cast iron as described in Japanese patent laid-open No. 4-209763 and Japanese patent publication No. 5-23921, for example.

In conventional $Si_3N_4$ based cutting tools, a deficiency resistance cutting tool is known in which the cutting tool has a composition comprising 0.1 to 20 volume percent of zirconium oxide, 0.1 to 14 volume percent of zirconium nitride, 3 to 15 volume percent of a Mg-Si-Zr-O-N bonding phase, and the balance being $\beta$-$Si_3N_4$ and incidental impurities (Japanese patent laid-open No. 3-275565).

Moreover, it is also known that the $Si_3N_4$ based cutting tools having deficiency resistance are produced by the following process: making a green compact by pressing a powder mixture, which comprises compounding and mixing the raw material powder composition comprising 1 to 27 wt.% of a zirconium nitride powder, 1 to 10 wt.% of a magnesium oxide powder, 0.1 to 5 wt.% of a silicon oxide powder, and the balance being $Si_3N_4$ powder; performing the first sintering of the green compact in a nitrogen atmosphere at a temperature of 1,500 to 2,000°C and at a pressure of 0.1 to 5 MPa (1 to 50 normal atmospheres); and continuously performing the second sintering thereof at least once in the nitrogen atmosphere at a temperature of 1,700 to 2,000°C and at a pressure of 10 to 200 MPa (100 to 2000 normal atmospheres) (Japanese patent laid-open No. 3-232773).

[Problems to be solved by the present invention]

Meanwhile, the trend in cutting is toward higher speeds and heavy loading in response to recent labor-saving demands. However, as a matter of fact, in most conventional $Si_3N_4$ based cutting tools including the above $Si_3N_4$ based cutting tools, it is easy to form defects and chipping of the blades due to insufficient toughness and their lives are considerably shortened, in particular under the continual heavy load cuttings, i.e. deep cutting and high sending rate cutting.

That is, the tendency in the use of cutting tools is towards severer cutting condition in recent years, so demands are increasing for $Si_3N_4$ based cutting tools which are satisfactorily durable during continual operation under severe conditions.

[Means for solving the problem]

Thus, the inventors of this invention have conducted research in order to improve the toughness of a $Si_3N_4$ based cutting tool, to obtain a $Si_3N_4$ based cutting tool having more excellent deficiency resistance. As a result the present invention provides in one embodiment a sintered material according to claim 1, a preferred embodiment of which is described in claim 3. The embodiment corresponding to claims 1 and 3 will be indicated in the following as embodiment (A). The present invention further provides a process for preparing the sintered materials of claims 1 or 3 which is described in claims 5 or 6. Still further there is provided a use of the sintered materials according to the embodiment (A) (corresponding to claims 1 or 3) as a cutting tool, and a cutting tool made of the sintered materials of claims 1 or 3.

The embodiment (A) corresponding to claims 1 and 3 and the corresponding processes of claims 5 and 6 will be explained in more detail now. By using an oxide of R, i.e. $R_2O_3$, (where R is at least one element selected from the group of yttrium and other rare earth metals, like scandium, lanthanum, cerium, praseodymium, neodymium, promethium, samarium, europium, gadolinium, terbium, dysprosium, holmium, erbium, thulium, ytterbium and lutetium), zirconium nitride powder (ZrN), magnesium oxide powder (MgO), silicon oxide powder ($SiO_2$), and silicon nitride ($Si_3N_4$), in particular mainly consisting of $\alpha$-$Si_3N_4$ as $Si_3N_4$ based raw material powder, compounding and mixing these raw material powders as a composition of 1 to 10 wt.% of $R_2O_3$, 0.5 to 15 wt.% of ZrN, 0.5 to 8 wt.% of MgO, 0.1 to 8 wt.% of $SiO_2$, and the balance $Si_3N_4$ at an ordinary condition, pressing to make a green compact, and then sintering the green compact at a pressurized nitrogen atmosphere, a complex oxide or Zr and R (described as $(Zr,R)O_2$ below due to the formation of $ZrO_2$ crystal form) and an extremely active complex oxynitride of R, Mg, Si and Zr (described as quaternary oxynitride) forms. As the quaternary oxynitride acts as a liquid phase, $Si_3N_4$ raw material powder mainly consisting of $\alpha$-$Si_3N_4$ gradually dissolves in the quaternary oxynitride and needle-like $\beta$-$Si_3N_4$ crystals precipitate. Thus, during sintering, a $Si_3N_4$ based sintered material forms having a $(Zr,R)O_2$ dispersion phase, a needle-like $\beta$-$Si_3N_4$ crystal phase, and a quaternary oxynitride bonding phase distributing along with the $\beta$-$Si_3N_4$ crystal phase. The $(Zr,R)O_2$ phase and the quaternary oxynitride phase produces excellent toughness and strength of the sintered material, and the $\beta$-$Si_3N_4$ crystal phase produces excellent wear resistance. The material shows long-term excellent cutting characteristics in the case of use in continual heavy load cutting requiring high toughness.

In the $Si_3N_4$ based cutting tools according to embodiment (A) of the present invention, the $(Zr,R)O_2$ and quaternary oxynitride contents in the $Si_3N_4$ based sintered material are limited to 0.1 to 10 and 3 to 15 volume percent, respectively, because of the improvement in toughness and strength due to coexistence of both components. A content of less than said lower limits does not bring about desirable toughness, while a content of more than said upper limits causes drastic decrease in wear resistance. Their preferable ranges are 0.5 to 3 volume percent for $(Zr,R)O_2$, 5 to 10 volume percent for the quaternary oxynitride.

[Examples according to embodiment (A)]

The $Si_3N_4$ based cutting tool according to embodiment (A) of the present invention will be explained in detail by the following examples.

The following raw material powders each having an average diameter ranging from 0.1 to 1 $\mu$m were prepared: $Si_3N_4$ powder (the volume ratio of $\alpha/\beta$ = 97/3 , and oxygen content: 2 wt.%), $Y_2O_3$ powder, $La_2O_3$ powder, $Yb_2O_3$ powder, $Er_2O_3$ powder, ZrN powder, MgO powder, and $SiO_2$ powder. These powders were compounded so as to become the composition as shown in Tables 1 to 2 of the embodiment (A), and then mixed by a wet process in a ball mill for 48 hours. After drying, each green compact in the shape of the cutting chip defined in JIS SNGN432 was made by pressing under a pressure of 1 ton/cm$^2$ and sintered under a predetermined pressure of nitrogen atmosphere within the range of 0.1 to 5 MPa (1 to 50 normal pressures) at a temperature within the range of 1,700 to 1,900°C for 2 hours, so the $Si_3N_4$ based cutting tools (example 1 to 14) according to embodiment (A) of the present invention and comparative $Si_3N_4$ based cutting tools (comparative examples 1 to 6) were produced.

The textures of the resulting $Si_3N_4$ based sintered materials making cutting tools were observed using a transmission electron microscope, and the content of each component was determined using an image analyzer. The results are shown in Tables 3 and 4 of embodiment (A) of the present invention. Tables 3 and 4 also show the results of Rockwell hardness (Scale A).

In the comparative examples 1 to 6, the content of the components of the $Si_3N_4$ based sintered material of each cutting tool is out of the claimed range of embodiment (A) of the present invention.

A wet continual deep cutting test of each sample against cast iron was carried out using a lathe under the following conditions until a deficiency occurs at the cutting edge:

Cut material: FC25 (A rod having four grooves in the longitudinal direction)
Cutting speed: 250 m/min
Feed per stroke: 0.5 mm/rev
Depth of cut: 2.5 mm

The flank wear of the blade was measured. The results are shown in Table 3 and 4.

[Advantages]

The results shown in Table 3 and 4 demonstrate that the cutting tools 1 to 14 according to embodiment (A) of the present invention have excellent wear resistances without any defect and chipping at the blade under a continual deep cutting condition requiring high toughness. On the other hand, in the cutting tools comparative examples 1 to 6, when either the content of $(Zr,R)O_2$ and quaternary oxynitride in the $Si_3N_4$ based sintered material is out of the lower limit of embodiment (A) of the present invention, some defects and chipping form and the tool has a short-term life, while an excessive content of above the upper limit causes drastic decreases in the wear resistance of the tool. Accordingly, as the $Si_3N_4$ based cutting tool of embodiment (A) of the present invention is made of a $Si_3N_4$ sintered material having high toughness and hardness, the tool shows excellent long-term cutting characteristics under conditions such as continuous cutting as well as continual heavy load cuttings, i.e. deep cutting and high sending rate cutting.

TABLE 1  of embodiment (A)

| SAMPLES | | COMPOSITION ( Wt.% ) | | | | | | | |
|---|---|---|---|---|---|---|---|---|---|
| | | $Y_2O_3$ | $La_2O_3$ | $Yb_2O_3$ | $Er_2O_3$ | $ZrN$ | $MgO$ | $SiO_2$ | $Si_3N_4$ |
| INVENTIVE CUTTING TOOL | 1 | 5 | — | — | — | 5 | 3 | 1. 5 | BAL. |
| | 2 | — | 3 | — | — | 3 | 3 | 0. 5 | BAL. |
| | 3 | — | — | 8 | — | 8 | 2 | 4 | BAL. |
| | 4 | — | 2 | 1 | — | 2 | 1 | 1 | BAL. |
| | 5 | — | — | 4 | 1 | 5 | 3 | 2 | BAL. |
| | 6 | 1 | 4 | — | — | 3 | 2. 5 | 1 | BAL. |
| | 7 | 2 | — | 4 | 1 | 3 | 3 | 1 | BAL. |
| | 8 | 0. 5 | — | — | 0. 5 | 5 | 2. 5 | 1 | BAL. |
| | 9 | — | 0. 5 | 0. 5 | 0. 5 | 0. 7 | 3 | 0. 1 | BAL. |
| | 1 0 | 4 | 4 | 2 | — | 1 5 | 3 | 8 | BAL. |

EP 0 742 182 B1

TABLE 2    of embodiment (A)

| SAMPLES | | COMPOSITION  ( Wt.% ) | | | | | | | |
|---|---|---|---|---|---|---|---|---|---|
| | | $Y_2O_3$ | $La_2O_3$ | $Yb_2O_3$ | $Er_2O_3$ | $ZrN$ | $MgO$ | $SiO_2$ | $Si_3N_4$ |
| INVENTIVE CUTTING TOOL | 1 1 | 2 | — | — | — | 4 | 1 | 0 . 2 | BAL. |
| | 1 2 | 5 | 1 | 1 | — | 4 | 5 | 1 | BAL. |
| | 1 3 | 1 | 1 | 1 | 1 | 3 | 4 | 1 | BAL. |
| | 1 4 | — | 2 | 2 | — | 4 | 3 | 2 | BAL. |
| COMPARATIVE CUTTING TOOL | 1 | 3 | — | — | — | 0 . 5 | 1 | 0 . 5 | BAL. |
| | 2 | — | — | — | 0 . 5 | 4 | 2 | 0 . 1 | BAL. |
| | 3 | — | — | 3 | — | 0 . 4 | 1 | 0 . 2 | BAL. |
| | 4 | 5 | — | — | 2 | 1 8 | 2 | 1 0 | BAL. |
| | 5 | 5 | — | 3 | — | 5 | 5 | 4 | BAL. |
| | 6 | 5 | 2 | 2 | 2 | 1 5 | 3 | 8 | BAL. |

EP 0 742 182 B1

TABLE 3 of embodiment (A)

| SAMPLES | | COMPOSITION OF Si$_3$N$_4$ SINTERED MATERIALS (VOL.%) | | | | HARDNESS ( H$_R$ A ) | WORN WIDTH OF BLADE REVANT FACE ( mm ) |
|---|---|---|---|---|---|---|---|
| | | (Zr, R) O$_2$ | | Quarternary Oxynitride | Si$_3$N$_4$ | | |
| | | Dissolved R Content ( mole % ) | | | | | |
| INVENTIVE CUTTING TOOL | 1 | 2 3 | 2. 9 | 8. 5 | BAL. | 9 2. 2 | 0. 3 3 |
| | 2 | 1 7 | 1. 7 | 6. 5 | BAL. | 9 2. 4 | 0. 3 4 |
| | 3 | 1 3 | 5. 0 | 8. 5 | BAL. | 9 2. 1 | 0. 3 8 |
| | 4 | 2 0 | 1. 1 | 5. 8 | BAL. | 9 3. 2 | 0. 3 1 |
| | 5 | 1 6 | 2. 9 | 7. 7 | BAL. | 9 2. 6 | 0. 3 5 |
| | 6 | 1 4 | 1. 7 | 7. 9 | BAL. | 9 2. 4 | 0. 3 4 |
| | 7 | 2 0 | 1. 7 | 9. 4 | BAL. | 9 2. 7 | 0. 3 7 |
| | 8 | 1 2 | 1. 6 | 5. 7 | BAL. | 9 3. 1 | 0. 3 2 |
| | 9 | 2 5 | 0. 5 | 7. 0 | BAL. | 9 2. 7 | 0. 3 9 |
| | 1 0 | 1 2 | 9. 7 | 1 2. 3 | BAL. | 9 2. 0 | 0. 4 1 |

EP 0 742 182 B1

## TABLE 4 of embodiment (A)

| SAMPLES | | COMPOSITION OF Si₃N₄ SINTERED MATERIALS (VOL.%) | | | | HARDNESS (H$_R$A) | WORN WIDTH OF BLADE RELEVANT FACE (mm) |
|---|---|---|---|---|---|---|---|
| | | Dissolved R Content (mole %) | (Zr, R)O₂ | Quaternary Oxynitride | Si₃N₄ | | |
| INVENTIVE CUTTING TOOL | 11 | 17 | 2.6 | 3.1 | BAL. | 93.3 | 0.39 |
| | 12 | 28 | 2.3 | 11.8 | BAL. | 92.1 | 0.42 |
| | 13 | 17 | 1.7 | 8.9 | BAL. | 92.6 | 0.37 |
| | 14 | 14 | 2.3 | 8.2 | BAL. | 92.7 | 0.35 |
| COMPARATIVE CUTTING TOOL | 1 | 23 | 0.2 ※ | 7.2 | BAL. | 92.7 | Broken after 6 min. |
| | 2 | 3 | 2.4 | 2.1 ※ | BAL. | 93.1 | Chipped after 7 min. |
| | 3 | 31 | 0.2 ※ | 5.7 | BAL. | 92.9 | Broken after 5 min. |
| | 4 | 10 | 12.3 ※ | 10.7 | BAL. | 92.2 | 0.58 |
| | 5 | 20 | 3.2 | 15.3 ※ | BAL. | 91.7 | 0.63 |
| | 6 | 13 | 11.2 ※ | 16.4 ※ | BAL. | 91.9 | 0.59 |

※ : OUT OF THE INVENTION

The present invention further provides a sintered material as described in claim 2, a preferred embodiment of which is described in claim 4. This embodiment will be indicated in the following as "embodiment (B)". Further the present invention provides a process for preparing the sintered materials according to the "embodiment (B)" (that is, the sintered materials of claims 2 or 4), which is described in claims 7 or 8. Still further the present invention provides a use

7

of the sintered materials according to claims 2 or 4 as a cutting tool, and a cutting tool made of the sintered materials of claims 2 or 4.

The details of the embodiment (B) of the present invention will be explained below concerning the composition of raw material powders on the method for producing the $Si_3N_4$ cutting tool, the reason for the limitation of the first and second sintering conditions, and the composition of the $Si_3N_4$ cutting tool. The following abbreviations are used below; $R_2O_3$ for the oxide of R, $ZrO_2$ for Zirconium oxide, MgO for magnesium oxide, $SiO_2$ for silicon oxide, and ZrN for zirconium nitride.

A. The composition of the raw material powders

(a) $R_2O_3$ powder

In the first sintering process, $R_2O_3$ reacts with MgO powder, $SiO_2$ powder, $SiO_2$ existing on the surface of $Si_3N_4$ powder, and a part of ZrN and $Si_3N_4$ powders to form a R-Mg-Si-Zr-O-N liquid phase of low viscosity, which can proceed satisfactorily sintering. In the second sintering process, the following reaction occurs due to higher nitrogen pressure than the first sintering process;

$$\text{Liquid phase (first sintering)} + N_2 \rightarrow \text{Liquid phase (second sintering)} + Si_3N_4 + ZrO_2 \qquad (1)$$

Namely, the $R_2O_3$ dissolves with the formed $ZrO_2$ and $Si_3N_4$ Simultaneously forms during the second sintering. Thus, the Si content in the liquid phase decreases, and the bonding phase formed from the liquid phase after the second sintering has increased Young' modulus and thermal expansion coefficient so that high compressive stress occurs in the $\beta$-$Si_3N_4$ particles. As the result, the $\beta$-$Si_3N_4$ particles act as reinforcing particles without easy breaking and make the deficiency resistance increase. The $R_2O_3$ content less than 1 weight percent does not satisfactorily improve its deficiency resistance, while the content over 10 weight percent causes decreased hardness and wear resistance of the obtained cutting tool due to excessive bonding phase. Thus, the $R_2O_3$ content is limited to the range of 1 to 10 weight percent. The preferable content is 2 to 8 weight percent.

(b) ZrN powder

In the first sintering process, ZrN partially dissolves in the liquid phase and the remaining part exists in the original state providing excellent sintering characteristics. In the second sintering process, $ZrO_2$ forms from a part of ZrN. A ZrN content of less than 1 weight percent does not satisfactorily improve its deficiency resistance, while a content of over 20 weight percent causes excessive $ZrO_2$ formation, which decreases its hardness and wear resistance. Thus, the ZrN content is limited to the range of 1 to 20 weight percent. The preferable content is 3 to 10 weight percent.

(c) MgO powder and $SiO_2$ powder

In the first sintering process, $SiO_2$ and MgO react with $R_2O_3$, $SiO_2$ existing on the surface of $Si_3N_4$ powder, and a part of ZrN and $Si_3N_4$ to form R-Mg-Si-Zr-O-N liquid phase providing excellent sintering characteristics. In the second sintering process, the Si content in the liquid phase formed by the above reaction (1) relatively decreases while the R and Mg contents increase. Thus, the Young's modulus and thermal expansion coefficient of the bonding phase formed during the second sintering increase so that high compressive stress causing improved deficiency resistance occurs in the $\beta$-$Si_3N_4$ particles. A MgO content of less than 0.5 weight percent or a $SiO_2$ content of less than 0.1 weight percent causes unsatisfactory sintering because of poor bonding of the $\beta$-$Si_3N_4$ particles due to low viscosity of the liquid phase, while a MgO content of over 5 weight percent decreases wear resistance, and a $SiO_2$ content of less than 5 weight percent causes decreased wear resistance as well as increased Si content in the bonding phase formed during second sintering. Thus, the MgO and $SiO_2$ contents are limited to 0.5 to 5 weight percent, and 0.1 to 2 weight percent, respectively. The preferable contents are 1 to 2 weight percent for the MgO powder and 0.1 to 1 weight percent for the $SiO_2$ powder.

B. The first sintering conditions

As above, the liquid phase formation of low viscosity promoting desirable sintering is essential for the first sintering process. The sintering conditions of a temperature less than 1,600 °C or a pressure less than 1 normal atmospheres causes unsatisfactory formation of the liquid phase. On the other hand, a pressure of over 50 normal atmospheres brings about the containment of high pressure $N_2$ gas inhibiting sintering. Further a temperature over 2,000 °C requires large scale facilities. Thus, these first sintering conditions are limited to 1,600 to 2,000 °C and 1 to 50 normal atmospheres. The preferable conditions are 1,700 to 1,800 °C and 10 to 30 normal atmospheres.

C. The second sintering condition

In the second sintering process, the above reaction (1) proceeds in which the decrease in Si content with $Si_3N_4$ and increase in R and Mg contents in the liquid phase optimize the composition of the bonding phase so that the deficiency resistance of the cutting tool improves. At a temperature less than 1,700 °C, $\beta$-$Si_3N_4$ does not sufficiently grow up to the needles, and at a pressure less than 100 normal atmospheres, the above reaction does not sufficiently proceed. On the other hand, a temperature over 2,000 °C or a pressure over 2,000 normal atmospheres requires large scale facilities. Thus, these second sintering conditions are limited to 1,700 to 2,000 °C and 100 to 2,000 normal atmospheres. The preferable conditions are 1,700 to 1,800 °C and 500 to 2,000 normal atmospheres.

D. The composition of the sintered compact forming the cutting tools

(1) $ZrO_2$ dissolving $R_2O_3$

During the second sintering process, $ZrO_2$ forms from a part of ZrN according to the above reaction (1), and it dissolves $R_2O_3$ contained in the bonding phase and also dissolves occasionally Mg and N. Moreover, $ZrO_2$ has an action optimizing the composition of the bonding phase in coexistence with ZrN, so the Young's modulus and thermal expansion coefficient of the bonding phase increase. As a result, because compressive stress applying to needle $\beta$-$Si_3N_4$ particles increases, $\beta$-$Si_3N_4$ particles act as reinforcing particles without easily breaking resulting improved deficiency resistance of the tool. However, a content of less than 0.1 volume percent does not cause satisfactory deficiency resistance, while a content of over 10 volume percent brings about poor wear resistance of the tool due to decreased hardness. Thus, the content of ZrO2 dissolving $R_2O_3$ is limited to the range of 0.1 to 10 volume percent, preferably 0.5 to 3 volume percent (The $ZrO_2$ dissolving $R_2O_3$ will be described as $Zr(R)O_2$ below).
Further, the quantity of the dissolved $R_2O_3$ is limited to 5 to 20 mole percent, preferably 6 to 12 mole percent, because a quantity of less than 5 mole percent does not satisfactorily improve the deficiency resistance and a quantity of over 20 mole percent causes poor wear resistance of the tool due to its decreased hardness.

(2) ZrN

ZrN optimize the texture of the bonding phase by the above reaction (1) in coexistence with ZrO2, and further improves the wear resistance of the tool due to its high hardness. At a content of less than 0.1 volume percent, wear resistance is unsatisfactory, while a content of over 10 volume percent causes decreased deficiency resistance. Therefore, the content of ZrN phase is limited to 0.1 to 10 volume percent, and preferably 0.5 to 5 volume percent.

(3) Bonding phase

In the first sintering process, the $R_2O_3$ powder, the MgO powder, the $SiO_2$ powder, $SiO_2$ existing on the surface of the $Si_3N_4$ powder, and a part of ZrN and Si3N4 react to form the low viscosity R -Mg-Si-Zr-O-N liquid phase. The liquid phase causes desirable sintering and becomes the bonding phase after cooling. Because the Young's modulus and thermal expansion coefficient of the material increase with the increased R content, $\beta$-$Si_3N_4$ particles acts as reinforcing particles without easily breaking due to the increased compressing stress applying to the needle $\beta$-$Si_3N_4$ particles after sintering so that the deficiency resistance of the tool significantly improves. A bonding phase content of less than 3 volume percent is an insufficient content for the bonding of the $\beta$-$Si_3N_4$ particles, while a content of over 15 volume percent causes decreased wear resistance of the tool due to its decreased hardness, so the content is limited to 3 to 15 volume percent, and preferably 5 to 10 volume percent.

[Examples of embodiment (B) of the present invention]

The embodiment (B) of the present invention will be explained in detail by examples.
The following raw material powders each having an average diameter ranging from 0.1 to 1 $\mu$m were prepared: $Si_3N_4$ powder, the oxide powders of Y and rare earth metal element, ZrN powder, and MgO powder, and Silicon oxide powder. These powders were compounded so as to become the composition shown in Table 1 to 2, and then mixed by a wet process. After drying, each green compact in the shape of the cutting chip defined in JIS SNGN432 was made by pressing and sintered under the condition shown in Table 1 to 2 of embodiment (B) of the present invention, so the $Si_3N_4$ based cutting tools (example 1 to 13, and comparative example 1 to 8) of embodiment (B) of the present invention and a conventional Si3N4 based cutting tools were obtained as shown in the Table 3 to 4 of embodiment (B) of the present invention.

The each composition of Zr(R)O$_2$, ZrN, R-Mg-Si-Zr-O-N bonding phase, and β-Si3N4 was determined by the following method, and the results are listed in Table 3 and 4, of embodiment (B) of the present invention,

The Zr(R)O$_2$ and ZrN content ware determined by calculation from the diffraction peak intensities of β-Si$_3$N$_4$, ZrO$_2$ and ZrN using X-ray diffractometry.

Moreover, the dissolved R$_2$O$_3$ content in the Zr(R)O$_2$ and the ratio of the bonding phase forming each cutting tool were determined by TEM (Transmission Electron Microscopy).

A wet continual cutting test was carried out using a lathe under the following conditions until a deficiency occurs at the cutting edge:

Cut material:         FC25 (A rod having four grooves)
Cutting speed:        250 m/min
Feed per stroke:      0.4 mm/rev
Depth of cut:         2 mm

The life time that the deficiency occurs for each sample is shown in Table 3 and 4 of embodiment (B) of the present invention.

In Table 2 and 4, of embodiment (B) of the present invention, the * mark means the condition out of this invention.

[Advantages]

The results shown in Table 1 through Table 4 of embodiment (B) of the present invention demonstrate that the cutting tools 1-13 based on the methods 1-13 of embodiment (A) of the present invention have significantly improved life time up to the defect occurrence compared with the conventional method.

Accordingly, the present invention provides excellent industrial advantages such as reduced frequency of the cutting tool exchange under the severe conditions and enhanced working efficiency.

EP 0 742 182 B1

TABLE 1 of embodiment (B)

| SAMPLES | | COMPOSITION OF RAW POWDERS (Wt. %) | | | | | FIRST SINTERING CONDITION | | | SECOND SINTERING CONDITION | | | Sintered Numbers |
|---|---|---|---|---|---|---|---|---|---|---|---|---|---|
| | | $ZrN$ | $R_2O_3$ | $MgO$ | $SiO_2$ | $Si_3N_4$ | Temp. (°C) | $N_2$ Press. (N.P.) | Time (hr) | Temp. (°C) | $N_2$ Press. (N.P.) | Time (hr) | |
| INVENTIVE METHODS | 1 | 4 | $Y_2O_3$ : 4 | 1 | 1 | BAL. | 1750 | 30 | 2 | 1750 | 100 | 1 | 1 |
| | 2 | 8 | $La_2O_3$ : 10 | 3 | 2 | BAL. | 1700 | 50 | 2 | 1750 | 1000 | 1 | 1 |
| | 3 | 5 | $Yb_2O_3$ : 7 | 1 | 1 | BAL. | 1750 | 20 | 2 | 1850 | 500 | 1 | 1 |
| | 4 | 4 | $Nd_2O_3$ : 3 | 1 | 0.2 | BAL. | 1750 | 5 | 3 | 1800 | 500 | 1 | 1 |
| | 5 | 7 | $Y_2O_3$ : 2, $Nd_2O_3$ : 1 | 2 | 0.5 | BAL. | 1750 | 20 | 2 | 1900 | 1500 | 2 | 1 |
| | 6 | 4 | $La_2O_3$ : 3, $Yb_2O_3$ : 3 | 1 | 1 | BAL. | 1750 | 10 | 3 | 1800 | 2000 | 1 | 1 |
| | 7 | 10 | $Y_2O_3$ : 10 | 2 | 2 | BAL. | 1700 | 20 | 2 | 1750 | 500 | 2 | 1 |
| | 8 | 19 | $Y_2O_3$ : 5 | 2 | 0.5 | BAL. | 1700 | 30 | 2 | 1750 | 200 | 2 | 2 |
| | 9 | 20 | $Y_2O_3$ : 4 | 1 | 0.2 | BAL. | 1750 | 20 | 2 | 1700 | 1000 | 1 | 1 |
| | 10 | 3 | $Er_2O_3$ : 5 | 1 | 0.2 | BAL. | 1750 | 40 | 3 | 1750 | 1000 | 2 | 2 |
| | 11 | 7 | $Dy_2O_3$ : 10 | 4 | 2 | BAL. | 1650 | 30 | 2 | 1750 | 500 | 3 | 1 |

11

$T A B L E$ 2 of embodiment (B)

| SAMPLES | | COMPOSITION OF RAW POWDERS (Wt.%) | | | | | FIRST SINTERING CONDITION | | | SECOND SINTERING CONDITION | | | Sintered Numbers |
|---|---|---|---|---|---|---|---|---|---|---|---|---|---|
| | | $ZrN$ | $R_2O_3$ | $MgO$ | $SiO_2$ | $Si_3N_4$ | Temp. (°C) | $N_2$ Press. (N.P.) | Time (hr) | Temp. (°C) | $N_2$ Press. (N.P.) | Time (hr) | |
| I.M. | 12 | 15 | $Y_2O_3:4$ | 1 | 2 | BAL. | 1800 | 50 | 2 | 1850 | 1000 | 1 | 1 |
| | 13 | 5 | $Y_2O_3:2$, $Yb_2O_3:4$ | 1 | 0.1 | BAL. | 1750 | 30 | 2 | 1700 | 1000 | 2 | 1 |
| COMPARATIVE METHODS | 1 | 4 | $Y_2O_3:2$ | 1 | $3^※$ | BAL. | 1750 | 10 | 2 | 1750 | 1000 | 1 | 1 |
| | 2 | 5 | $Y_2O_3:12^※$ | 1 | 0.5 | BAL. | 1700 | 50 | 2 | 1800 | 500 | 2 | 1 |
| | 3 | 5 | $Y_2O_3:0.5^※$ | 0.5 | 0.5 | BAL. | 1900 | 50 | 3 | 1900 | 1000 | 2 | 1 |
| | 4 | 5 | $La_2O_3:20^※$ | 3 | 2 | BAL. | 1700 | 50 | 2 | 1750 | 1000 | 1 | 1 |
| | 5 | 20 | $Er_2O_3:4$ | $6^※$ | 0.5 | BAL. | 1650 | 30 | 2 | 1750 | 2000 | 1 | 2 |
| | 6 | $30^※$ | $Y_2O_3:5$ | 5 | 5 | BAL. | 1700 | 5 | 2 | 1750 | 1500 | 1 | 1 |
| | 7 | 6 | $Y_2O_3:1$ | 2 | 0.2 | BAL. | 1800 | 50 | 3 | 1800 | 1500 | 1 | 2 |
| | 8 | 7 | $Y_2O_3:16^※$ | 2 | $4^※$ | BAL. | 1750 | 50 | 2 | 1750 | 1000 | 1 | 1 |
| C.M. | | 5 | - | 2 | 2 | BAL. | 1800 | 20 | 2 | 1750 | 1000 | 2 | 1 |

[REMARKS] 1) I.M. : INVENTIVE METHOD   3) I.C.T : INVENTIVE CUTTING TOOL   ※ : OUT OF THE INVENTION
2) C.M. : CONVENTIONAL METHOD   4) C.C.T : CONVENTIONAL CUTTING TOOL

EP 0 742 182 B1

TABLE 3 of embodiment (B)

| SAMPLES | | METHODS | | COMPOSITION OF EACH COMPONENT VOL.% | | | | | life time (min.) |
|---|---|---|---|---|---|---|---|---|---|
| | | | | Zr (R) O$_2$ Content | | ZrN | R-Zr-Si-O-N Bonding Phase | β-Si$_3$N$_4$ & Incidental Impurity | |
| | | | | R$_2$O$_3$ Content (mol %) | | | | | |
| INVENTIVE CUTTING TOOL | 1 | INVENTIVE METHODS | 1 | Y$_2$O$_3$ : 8 | 1. 0 | 1. 1 | 7 | BAL. | 16 |
| | 2 | | 2 | La$_2$O$_3$ : 10 | 1. 9 | 2. 2 | 11 | BAL. | 12 |
| | 3 | | 3 | Yb$_2$O$_3$ : 6 | 0. 6 | 1. 7 | 7 | BAL. | 17 |
| | 4 | | 4 | Nd$_2$O$_3$ : 5 | 0. 6 | 1. 3 | 4 | BAL. | 14 |
| | 5 | | 5 | Y$_2$O$_3$ : 4, Nd$_2$O$_3$ : 2 | 1. 6 | 2. 2 | 6 | BAL. | 18 |
| | 6 | | 6 | La$_2$O$_3$ : 4, Yb$_2$O$_3$ : 4 | 1. 4 | 0. 8 | 6 | BAL. | 17 |
| | 7 | | 7 | Y$_2$O$_3$ : 15 | 2. 0 | 3. 1 | 15 | BAL. | 12 |
| | 8 | | 8 | Y$_2$O$_3$ : 7 | 2. 0 | 6. 5 | 8 | BAL. | 13 |
| | 9 | | 9 | Y$_2$O$_3$ : 5 | 3. 0 | 6 | 6 | BAL. | 11 |
| | 10 | | 10 | Er$_2$O$_3$ : 5 | 0. 6 | 0. 8 | 5 | BAL. | 15 |
| | 11 | | 11 | Dy$_2$O$_3$ : 10 | 1. 9 | 1. 7 | 12 | BAL. | 12 |

13

T A B L E  4  of embodiement (B)

| SAMPLES | METHODS: | COMPOSITION OF EACH COMPONENT VOL.% | | | | | life time (min.) |
|---|---|---|---|---|---|---|---|
| | | Zr (R) O₂ Content — R₂O₃ Content (mol %) | Zr(R)O₂ | ZrN | R-Zr-Si-O-N Bonding Phase | β-Si₃N₄ & Incidental Impurity | |
| I.C.T. 12 | I.M. 12 | $Y_2O_3 : 5$ | 7 | 2 | 6 | BAL. | 12 |
| I.C.T. 13 | I.M. 13 | $Y_2O_3 : 3$, $Yb_2O_3 : 3$ | 1.1 | 1.2 | 7 | BAL. | 17 |
| COMPARATIVE CUTTING TOOL 1 | COMPARATIVE METHOD 1 | $Y_2O_3 : 3$* | 2.2 | 0.2 | 7 | BAL. | 3 |
| 2 | 2 | $Y_2O_3 : 18$ | 0.6 | 1.7 | 13 | BAL. | 5 |
| 3 | 3 | $Y_2O_3 : 2$* | 0.4 | 1.8 | 2* | BAL. | 2 |
| 4 | 4 | $La_2O_3 : 15$ | 1.3 | 1.3 | 17* | BAL. | 5 |
| 5 | 5 | $Er_2O_3 : 5$ | 0.5 | 12* | 8 | BAL. | 7 |
| 6 | 6 | $Y_2O_3 : 4$* | 12* | 1.0 | 14 | BAL. | 6 |
| 7 | 7 | $Y_2O_3 : 3$* | 1.2 | 1.7 | 5 | BAL. | 3 |
| 8 | 8 | $Y_2O_3 : 25$* | 1.3 | 2.2 | 15 | BAL. | 4 |
| C.C.T. | C.M. | $ZrO_2 : 2$ | | 2 | 4 | BAL. | 7 |

[REMARKS] 1) I.M. : INVENTIVE METHOD  
2) C.M. : CONVENTIONAL METHOD  
3) I.C.T : INVENTIVE CUTTING TOOL  
4) C.C.T : CONVENTIONAL CUTTING TOOL  
* : OUT OF THE INVENTION

**Claims**

1. A sintered material based on a silicon nitride compound comprising:

0.5 to 10 volume percent of a dispersion phase forming component,

14

comprising a complex oxide of Zr and R (wherein R is at least one element selected from the group of yttrium and other rare earth metals),

3 to 15 volume percent of a bonding phase forming component, comprising a complex oxynitride of R, Mg, Si, and Zr (wherein R is as defined above), and

the balance being another dispersion phase forming component, comprising needle-like crystals of $\beta$-silicon nitride and incidental impurities.

2. A sintered material based on a silicon nitride compound comprising:

0.1 to 10 volume percent of zirconium oxide dissolving 5 to 20 mole percent of an oxide of R (wherein R is at least one element selected from the group of yttrium and other rare earth metals),

0.1 to 10 volume percent of zirconium nitride,

3 to 15 volume percent of a R-Mg-Si-Zr-O-N bonding phase (wherein R is as defined above), and

the balance being $\beta$-silicon nitride and incidental impurities.

3. The sintered material according to claim 1 comprising 0.5 to 3 volume percent of the complex oxide of Zr and R, and 5 to 10 volume percent of the complex oxynitride of R, Mg, Si, and Zr.

4. The sintered material according to claim 2, which comprises 0.5 to 3 volume percent of zirconium oxide dissolving 5 to 20 mole percent of an oxide of R (wherein R is as defined above),

0.5 to 5 volume percent zirconium nitride, and

5 to 10 volume percent of the R-Mg-Si-Zr-O-N bonding phase.

5. A process for preparing the sintered material according to claims 1 or 3, which comprises:

compounding and mixing a raw material powder composition, comprising

1 to 10 wt.% of $R_2O_3$ (wherein R is as defined above),

0.5 to 15 wt.% of ZrN,

0.5 to 8 wt.% of MgO,

0.1 to 8 wt.% of $SiO_2$, and

the balance being $Si_3N_4$,

pressing the raw material powder composition to make a green compact, and then sintering the green compact under a pressurized nitrogen atmosphere.

6. The process according to claim 5, wherein the green compact is sintered in a nitrogen atmosphere at a pressure within the range of 0.1 to 5 MPa (1 to 50 normal pressures), and at a temperature within the range of 1,700 to 1,900°C.

7. A process for preparing the sintered material according to claims 2 or 4, which comprises compounding a raw material powder composition, comprising

1 to 10 wt.% of an oxide powder of R,

0.5 to 20 wt.% of a zirconium nitride powder,

0.5 to 5 wt.% of a magnesium oxide powder,

0.5 to 5 wt.% of a silicon oxide powder, and

the balance being silicon nitride powder; mixing thereof; forming a green compact; performing a first sintering of the green compact under a nitrogen atmosphere at a temperature of 1,600 to 2,000°C and at a pressure of 0.1 to 5 MPa (1 to 50 normal pressures); and performing at least one second sintering thereof under a nitrogen atmosphere at a temperature of 1,700 to 2,000°C and at a pressure of 10 to 200 MPa (100 to 2000 normal pressures).

8. The process according to claim 7, wherein the first sintering is carried out at 1,700 to 1,800°C and 1 to 3 MPa (10 to 30 normal pressures) for 2 to 3 hours, and the second sintering is carried out at 1,700 to 1,800°C and 50 to 200 MPa (500 to 2,000 normal pressures) for 1 to 3 hours.

9. Use of the sintered materials according to any of claims 1 to 4 as a cutting tool.

**10.** A cutting tool made of the sintered materials according to any of claims 1 to 4.


**Patentansprüche**


**1.** Gesintertes Material auf Basis einer Siliziumnitrid-verbindung, das umfaßt:

0,5 bis 10 Volumenprozent einer Dispersionsphasen-bildenden Komponente, die ein komplexes Oxid von Zr und R (worin R mindestens ein Element ist, das aus der Gruppe von Yttrium und anderen Seltenerd-Metallen ausgewählt wird) umfaßt,
3 bis 15 Volumenprozent einer Bindungsphasen-bildenden Komponente, die ein komplexes Oxynitrid von R, Mg, Si und Zr (worin R wie oben definiert ist) umfaßt, und den Rest, der eine weitere Dispersionsphasen-bildende Komponente ist,
enthaltend nadelartige Kristalle von $\beta$-Siliziumnitrid und zufällige Verunreinigungen.


**2.** Gesintertes Material auf Basis einer Siliziumnitrid-verbindung, das umfaßt:

0,1 bis 10 Volumenprozent Zirkoniumdioxid, in dem 5 bis 20 Mol-% eines Oxides von R gelöst sind (worin R mindestens ein Element ist, das aus der Grupe von Yttrium und anderen Seltenerd-Metallen ausgewählt wird),
0,1 bis 10 Volumenprozent Zirkoniumnitrid,
3 bis 15 Volumenprozent einer R-Mg-Si-Zr-O-N-Bindungs-Phase (worin R wie oben definiert ist), und den Rest aus $\beta$-Siliziumnitrid und zufälligen Verunreinigungen.


**3.** Gesintertes Material nach Anspruch 1, das 0,5 bis 3 Volumenprozent des komplexen Oxides von Zr und R und 5 bis 10 Volumenprozent des komplexen Oxynitrides von R, Mg, Si und Zr umfaßt.


**4.** Gesintertes Material nach Anspruch 2, das umfaßt:

0,5 bis 3 Volumenprozent Zirkoniumdioxid, das 5 bis 20 Mol-% eines Oxides von R gelöst aufweist (worin R wie oben definiert ist),
0,5 bis 4 Volumenprozent Zirkoniumnitrid und
5 bis 10 Volumenprozent einer R-Mg-Si-Zr-O-N-Bindungs-Phase.


**5.** Verfahren zur Herstellung eines gesinterten Materials nach Anspruch 1 oder 3 das umfaßt:

Compoundieren und Mischen einer Rohmaterial-Pulverzusammensetzung, die umfaßt:
1 bis 10 Gew.-% $R_2O_3$ (worin R wie oben definiert ist),
0,5 bis 15 Gew.-% ZrN,
0,5 bis 8 Gew.-% MgO,
0,1 bis 8 Gew.-% $SiO_2$ und
den Rest $Si_3N_4$,
Verpressen der Rohmaterial-Pulverzusammensetzung, um einen Roh-Pulverpreßling herzustellen und anschließend Sintern des Roh-Pulverpreßlings unter Druck in einer Stickstoffatmosphäre.


**6.** Verfahren nach Anspruch 5, worin der Roh-Pulverpreßling in einer Stickstoffatomsphäre bei einem Druck im Bereich von 0,1 bis 5 MPa (1 bis 50 Normaldrücke) und bei einer Temperatur im Bereich von 1700 bis 1900°C gesintert wird.


**7.** Verfahren zur Herstellung eines gesinterten Materials nach den Ansprüchen 2 oder 4, daß umfaßt: Compoundieren einer Rohmaterial-Pulverzusammensetzung umfaßt, die umfaßt:

1 bis 10 Gew.-% eines Oxidpulvers von R,
0,5 bis 20 Gew.-% eines Zirkoniumnitrid-Pulvers,
0,5 bis 5 Gew.-% eines Magnesiumoxid-Pulves,
0,5 bis 5 Gew.-% eines Siliziumdioxid-Pulvers und
den Rest, bei dem es sich um Siliziumnitrid-Pulver handelt; Mischen; Bildung eines Roh-Pulverpreßlings, Durchführen eines ersten Sinterns des Roh-Pulverpreßlings unter einer Stickstoffatmosphäre bei einer Temperatur von 1600 bis 2000°C und einem Druck von 0,1 bis 5 MPa (1 bis 50 Normaldrücke) und Durchführung mindestens eines zweiten Sinterns unter einer Stickstoffatmosphäre bei einer Temperatur von 1700 bis 2000°C und einem Druck von 10 bis 200 MPa (100 bis 2000 Normaldrücke).

8. Verfahren nach Anspruch 7, worin das erste Sintern bei 1700 bis 1800°C und 1 bis 3 MPa (10 bis 30 Normaldrük-ken) für 2 bis 3 Stunden durchgeführt wird, und das zweite Sintern bei 1700 bis 1800°C und 50 bis 200 MPa (500 bis 2000 Normaldrücken) für 1 bis 3 Stunden durchgeführt wird.

9. Verwendung der gesinterten Materialien nach irgend einem der Ansprüche 1 bis 4 als Schneidwerkzeug.

10. Schneidwerkzeug, hergestellt aus den gesinterten Materialien nach irgend einem der Ansprüche 1 bis 4.

## Revendications

1. Matériau fritté à base d'un composé de nitrure de silicium comprenant :

   0,5 à 10 pour cent en volume d'un composant formant une phase de dispersion, comprenant un oxyde complexe de Zr et de R (dans lequel R est au moins un élément choisi parmi l'yttrium et d'autres métaux de terres rares),
   3 à 15 pour cent en volume d'un composant formant une phase de liaison,
   comprenant un oxynitrure complexe de R, Mg, Si, et Zr (dans lequel R est tel que défini ci-dessus), et
   le solde étant un autre composant formant une autre phase de dispersion,
   comprenant des cristaux en aiguille de nitrure de silicium $\beta$ et des impuretés occasionnelles.

2. Matériau fritté à base d'un composé de nitrure de silicium comprenant :

   0,1 à 10 pour cent en volume d'oxyde de zirconium dissolvant 5 à 20 pour cent en mole d'un oxyde de R (dans lequel R est au moins un élément choisi parmi l'yttrium et d'autres métaux de terres rares),
   0,1 à 10 pour cent en volume de nitrure de zirconium, 3 à 15 pour cent en volume d'une phase de liaison R-Mg-Si-Zr-O-N (dans laquelle R est tel que défini ci-dessus), et
   le solde étant du nitrure de silicium $\beta$ et des impuretés occasionnelles.

3. Matériau fritté selon la revendication 1 comprenant 0,5 à 3 pour cent en volume de l'oxyde complexe de Zr et de R, et 5 à 10 pour cent en volume de l'oxynitrure complexe de R, Mg, Si et Zr.

4. Matériau fritté selon la revendication 2, qui comprend 0,5 à 3 pour cent en volume d'oxyde de zirconium dissolvant 5 à 20 pour cent en mole d'un oxyde de R (dans lequel R est tel que défini ci-dessus,

   0,5 à 5 pour cent en volume de nitrure de zirconium, et 5 à 10 pour cent en volume de la phase de liaison R-Mg-Si-Zr-O-N.

5. Procédé de préparation du matériau fritté selon la revendication 1 ou 3, qui comprend les étapes consistant à :

   mélanger et broyer une composition de poudre de matière première, comprenant
   1 à 10% en poids de $R_2O_3$ (dans lequel R est tel que défini ci-dessus),
   0,5 à 15% en poids de ZrN,
   0,5 à 8% en poids de MgO,
   0,1 à 8% en poids de $SiO_2$, et
   la solde étant $Si_3N_4$,
   comprimer la composition de poudre de matière première pour faire un comprimé cru,
   et ensuite fritter le comprimé sous une atmosphère d'azote pressurisée.

6. Procédé selon la revendication 5, dans lequel le comprimé cru est fritté sous une atmosphère d'azote à une pression dans l'intervalle de 0,1 à 5 MPa (1 à 50 fois la pression normale), et à une température dans l'intervalle de 1700 à 1900°C.

7. Procédé de préparation du matériau fritté selon la revendication 2 ou 4, qui comprend les étapes consistant à mélanger une composition de poudre d'une matière première comprenant

   1 à 10% en poids d'une poudre d'oxyde de R,

0,5 à 20% en poids d'une poudre de nitrure de zirconium,

0,5 à 5% en poids d'une poudre d'oxyde de magnésium,

0,5 à 5% en poids d'une poudre d'oxyde de silicium, et

la solde étant une poudre de nitrure de silicium; à broyer ces poudres; à former un comprimé cru, à réaliser un premier frittage du comprimé cru sous une atmosphère d'azote à une température de 1600 à 2000°C et à une pression de 0,1 à 5 MPa (1 à 50 fois la pression normale); et à réaliser au moins un second frittage de celle-ci sous une atmosphère d'azote à une température de 1700 à 2000°C et à une pression de 10 à 200 MPa (100 à 2000 fois la pression normale).

8. Procédé selon la revendication 7, dans lequel le premier frittage est réalisé à 1700 à 1800°C et 1 à 3 MPa (10 à 30 fois la pression normale) pendant 2 à 3 heures, et le second frittage est réalisé à 1700 à 1800°C et 50 à 200 MPa (500 à 2000 fois la pression normale) pendant 1 à 3 heures.

9. Utilisation des matériaux frittés selon l'une quelconque des revendications 1 à 4 comme outil de coupe.

10. Outil de coupe fait à partir du matériau fritté selon l'une des revendications 1 à 4.